# EUROPÄISCHE PATENTSCHRIFT

(11) **EP 0 559 110 B1**
(45) Veröffentlichungstag und Bekanntmachung des Hinweises auf die Patenterteilung: **06.11.1996**
(21) Anmeldenummer: 93103186.8
(22) Anmeldetag: 27.02.1993
(51) Int. Cl.: G08B 13/193, G02B 7/02, G01J 5/08

(54) **Infrarot-Bewegungsmelder mit einer Fresnellinse**
Infrared-sensor with Fresnel lens
Détecteur infrarouge avec lentille Fresnel

(30) Priorität: 06.03.1992 DE 4207112
(43) Veröffentlichungstag der Anmeldung: 08.09.1993
(73) Patentinhaber: ABB PATENT GmbH, D-68309 Mannheim (DE)
(72) Erfinder: Stumpf, Heinrich, W-5885 Schalksmühle 3 (DE)
(74) Vertreter: Rupprecht, Klaus, Dipl.-Ing.

(56) Entgegenhaltungen:
- DE-U- 9 113 638

## Beschreibung

Die Erfindung betrifft einen Bewegungsmelder nach dem Oberbegriff des Anspruches 1.

Es ist allgemein üblich, bei Infrarot-Bewegungsmeldern die Wärmestrahlung mit Hilfe einer Fresnellinse auf einem Infrarot-Detektor zu fokussieren. Der wesentliche Vorteil einer Fresnellinse gegenüber normalen Sammellinsen besteht darin, daß sie relativ einfach durch Prägen einer dünnen Kunststoffolie hergestellt werden kann. Diese Folie muß in einem Fensterausschnitt des Gerätegehäuses exakt positiniert werden, damit es nicht zu einer Fehlleitung der Wärmestrahlung kommt. Um einen möglichst großen horizontalen Erfassungswinkel zu erreichen, verläuft der Fensterausschnitt bogenförmig um den Infrarotdetektor, bei vorzugsweise in Strahlenrichtung verlaufender Trennebene eines die Elektronik des Bewegungsmelders umschließenden, aus beispielweise zwei topfförmigen Teilen bestehenden Gehäuses. Die als Fresnellinse wirkende rechteckige Folie muß diesem Bogen angepaßt werden. Dies gelingt mit Hilfe eines relativ formstabilen Rahmens, mit dem die Folie verbunden wird. Eine häufig praktizierte Maßnahme zur Verbindung besteht darin, daß die Folie in ein Spritzwerkzeug eingelegt und mit einem Rahmen umspritzt wird; also ein relativ aufwendiger Fertigungsvorgang, der sich selbstverständlich auf die Kosten des Gerätes auswirkt.

DE-U-9 113 638 zeigt einen JR-Detektor, bei dem die Folie in das Spritzwerkzeug für das Gehäuse eingespannt und mit dem flüssigen Gehausematerial umspritzt wird. Somit wird die Folie direkt und unlöslich mit dem Gehäuse verbunden.

Aufgabe der Erfindung ist es, einen Bewegungsmelder der im Oberbegriff des Anspruchs 1 genannten Art zu schaffen, der sich leicht herstellen läßt, eine sichere Fixierung der Fresnellinse ermöglicht und bei dem weiterhin eine zuverlässige Abdichtung des Fensterausschnittes ohne zusätzliche Dichtungsmittel erreicht wird.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Es muß als durchaus überraschend gewertet werden, daß es gelingt, an die sich über eine große Fläche erstreckende dünne Fresnellinse im selben Spritzgußvorgang einen wesentlich dickeren Rahmen anzuformen, ohne daß hierunter die optische Qualität der Linse leidet. Voraussetzung ist hierfür ein Spritzmaterial mit bei Erwärmung guten Fließeigenschaften, das zudem im erkalteten Zustand eine gute IR-Lichtdurchlässigkeit besitzt. Durch das Spritzgießen der Fresnellinse mit einem angeformten Rahmen wird ihre Herstellung außerordentlich erleichtert. Ein weiterer Vorteil der Erfindung besteht darin, daß die konische Ausbildung der Rahmenlängsstege ein paßgenaues Eintauchen des Rahmens in hierfür vorgesehene Rahmentaschen des Gerätegehäuses ermöglichen. Dadurch wird nicht nur eine genaue Fixierung, sondern auch eine ausreichende Abdichtung gegenüber Spritzwasser erzielt, ohne daß hierzu zusätzliche Dichtungsmittel erforderlich wären.

Von besonderer Bedeutung ist eine Weiterbildung des Erfindungsgegenstandes, die vorsieht, daß in Analogie zu einer aus einer Folie gebildeten Fresnellinse auch beim Spritzvorgang ihre Herstellung als ein im wesentlichen flaches Formteil erfolgt, bei dem die Frontseite der Fresnellinse auf einer planen Fläche ihrer Gußform liegt. Eine solche sich entlang einer Ebene erstreckende Fresnellinse hat den Vorteil, daß die Spritzgußform wesentlich einfacher gestaltet sein kann und die Ausbildung der Linsenelemente im wesentlichen einer folienartigen Fresnellinse entspricht. Bezüglich des Spritzgußmaterials muß hier allerdings die weitere Forderung gestellt werden, daß es sich um ein thermoplastisches Material handelt, so daß die Fresnellinse im entsprechenden Radius gebogen werden kann. Durch die Flexibilität des Materials ist außerdem gewährleistet, daß auch bei Abmessungstoleranzen zwischen den Rahmentaschen der beiden aufeinanderzusetzenden Gehäusehälften und der Fresnellinse, diese gut dichtend an den Wänden der Rahmentaschen anliegt, wobei die konische Ausbildung der Rahmenlängsstege entsprechend der Aushebeneigung innerhalb der Rahmentaschen den Dichtungsvorgang entscheidend unterstützt.

Weiterhin ist vorgesehen, auf der der Frontseite gegenüberliegenden Rückseite der Rahmenlängsstege, im geeigneten Abstand zueinander, Querschlitze anzubringen, durch die eine Vielzahl einzelner, in einer Reihe angeordneter Zähne entstehen. Die Querschlitze sorgen dafür, daß die beim Biegevorgang der Fresnellinse zunehmende Radiusverkleinerung auf der Rückseite der Rahmenlängsstege und die damit verbundene Materialverdrängung nicht zu Rissen auf der Frontseite führt. Hierzu sind die Querschlitze mindestens so breit, daß sie bei einer Verformung des Rahmens zum Einsetzen der Fresnellinse in die zugehörigen Rahmentaschen ein Zusammenpressen der Zähne verhindern und dadurch Materialspannungen vermeiden helfen.

Die Querschlitze haben weiterhin den Vorteil, daß sie die ohnehin erforderliche Materialanhäufung im Bereich des Rahmens reduzieren helfen und damit den Spritzvorgang erleichtern. Insofern können sich die Querschlitze in weiterer Ausbildung des Erfindungsgegenstandes bis in die Rahmenquerstege hinein ausdehnen, die dazu dienen, die Rahmenlängsstege miteinander zu verbinden und damit einen geschlossenen Rahmen zu bilden.

Eine weitere Möglichkeit, Material einzusparen besteht jedoch darin, die Rahmenquerstege als Kastenprofil zu formen, wobei innerhalb des Kastenprofils Versteifungsstege vorgesehen sind. Als besonders günstig für den Spritzvorgang hat sich eine in der Mitte der Fresnellinse vorgesehene Einspritzstelle erwiesen. Es ist zweckmäßig, den Spritzvorgang dadurch zu begünstigen, daß der mittlere Linsenkörper der Fresnellinse gegenüber den beiden äußeren Linsenkörpern entwas dicker gestaltet wird, um dadurch den Materialfluß zu erleichtern. Ein weiterer Vorteil dieser Maßnahme besteht darin, daß durch die Materialanhäufung in der Mitte des Linsenkörpers eine Schwächung der Wärmestrahlung gegenüber den Seitenbereichen erzielt wird, was zu einer gleichmäßigeren Aufnahmecharakteristik führt, weil die Optik im mittleren Bereich der Fresnellinse ohne Zusatzmaßnahmen ihre höchste Empfindlichkeit aufweist.

Die Abdichtung innerhalb der Rahmentaschen der beiden Gehäusehälften wird dadurch weiter unterstützt, daß eine Auflagestufe ausgebildet ist, auf der der Rahmenlängssteg mit seinem zur Frontseite gelegenen vorderen Teil seiner in die Rahmentasche eintauchenden Auflagefläche auftrifft. Hierdurch entsteht eine mäanderartige Abdichtung, bei der die glatte Frontseite der Fresnellinse an der Wand der Rahmentaschen anliegt und sich hieran eine zweite Auflagefläche an der Auflagestufe anschließt.

Ein Ausführungsbeispiel der Erfindung ist in den Zeichnungen dargesellt und wird im folgenden näher beschrieben. Es zeigen:
- Fig. 1: eine Fresnellinse mit Rahmen in Draufsicht auf die Rückseite,
- Fig. 2: eine Fresnellinse seitlich im Schnitt entlang der Schnittline A-B,
- Fig. 3: einen Ausschnitt aus der Fresnellinse in Frontansicht,
- Fig. 4: eine zweite Seitenansicht der Fresnellinse in Schnitt entlang der Schnittlinie C-D,
- Fig. 5: eine zweite Variante der Fresnellinse wiederum in Draufsicht auf die Rückseite,
- Fig. 6: die Fresnellinse nach Fig. 5 in Seitenansicht,
- Fig. 7: eine vergrößerte zweite Seitenansicht der Fresnellinse nach Fig. 5 im Schnitt,
- Fig. 8: ein Gehäuseteil in Draufsicht zum Gehäuse innenraum,
- Fig. 9: das Gehäuseteil nach Fig. 8 seitlich im Schnitt.

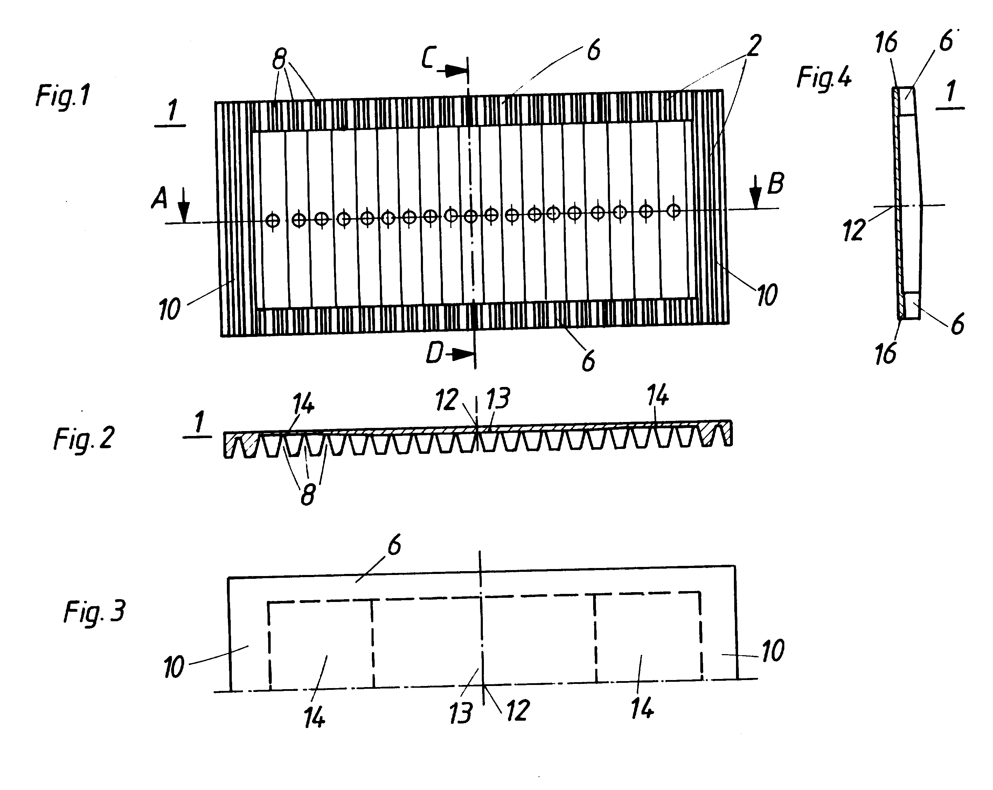

Wie die Figuren 1 bis 4 erkennen lassen, erstreckt sich die erfindungsgemäß als Spritzgußteil hergestellte Fresnellinse in Analogie zu einer solchen, die aus einer Folie besteht, entlang einer Ebene. Die einzelnen Linsenelemente sind durch Kreisringe angedeutet und liegen im Bereich des optischen Teils der Fresnellinse 1, der von einem Rahmen 2 umgeben ist. Der Rahmen 2 besteht aus zwei parallen Rahmenlängsstegen 6, die durch zwei ebenfalls parallele Rahmenquerstege 10 miteinander verbunden sind. Die aus thermoplastischem Material gespritzte Fresnellinse 1 erhält dadurch eine erhöhte Biegeelastizität, daß entlang der Rahmenlängsstege 6 in Richtung der Rahmenquerstege liegende Querschlitze 8 ausgespart sind, so daß entlang der beiden Rahmenlängsstege eine Vielzahl einzelner, eine Zahnreihe bildender Zähne entstehen. Bei dieser Ausführungsvariante setzen sich die Querschlitze 8 bis in den Bereich der Rahmenquerstege 10 hinein fort.

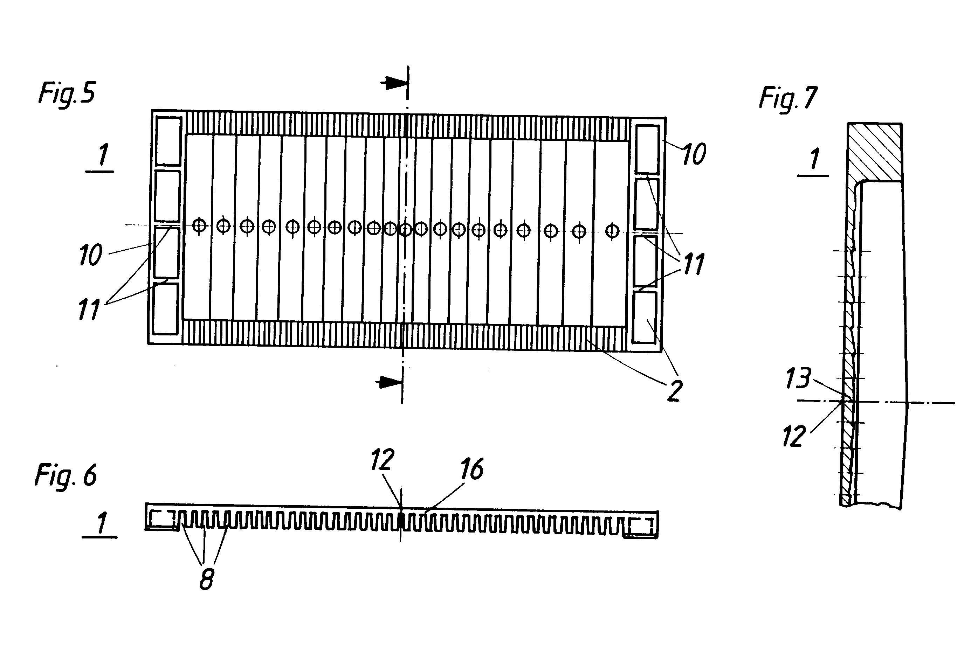

Die zweite, in den Figuren 5 bis 7 dargestellte Variante, unterscheidet sich von der vorhergehenden dadurch, daß die Rahmenquerstege 10 mit einem Kastenprofil versehen sind, in dem Versteifungsstege 11 ausgebildet sind. Dies dient einer noch größeren Materialersparnis und damit einer Verbesserung des Spritzvorganges. Der in Figur 7 vergrößert dargestellte Schnitt durch die Fresnellinse 1 in Seitenansicht, läßt das Linsenprofil erkennen. Der mittlere Linsenkörper 13 der Fresnellinse besitzt eine größere Dicke als die beiden seitlichen Linsenkörper 14, was, wie bereits erwähnt, zu einer gleichmäßigeren optischen Aufnahmecharakteristik der Fresnellinse 1 führt.

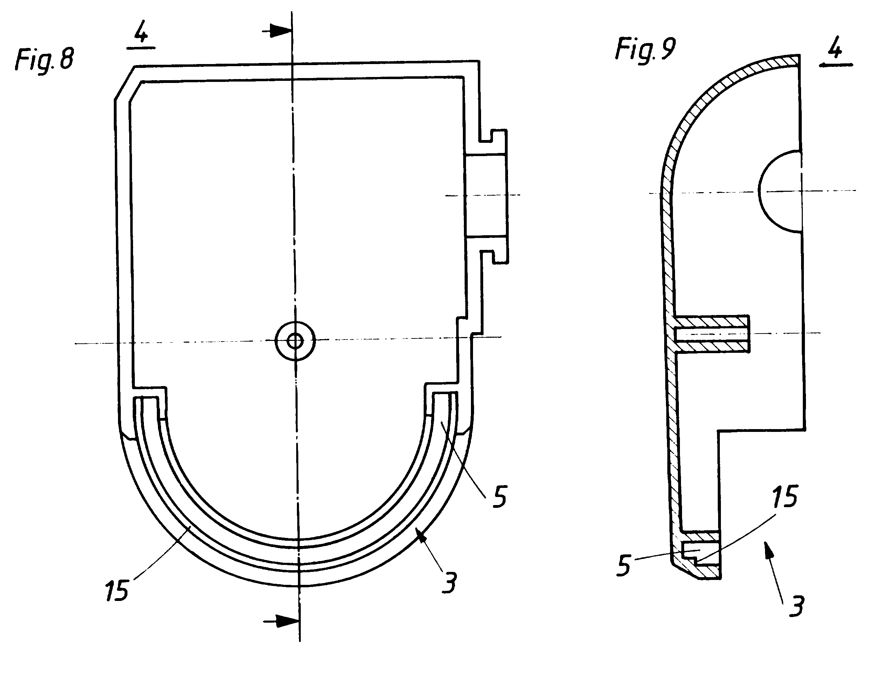

Das Gerätegehäuse des Bewegungsmelders besteht aus zwei aufeinanderzusetzenden Gehäuseteilen, von denen ein Gehäuseteil 4 in den Figuren 8 und 9 dargestellt ist. Zwischen den beiden aufeinandergesetzten Gehäuseteilen 4 liegt ein Fensterausschnitt 3, der bogenförmig um einen nicht dargestellten Infrarotdetektor angeordnet ist, und in den die entsprechend geformte Fresnellinse 1 eingesetzt werden muß. Hierzu ist in den beiden Gehäuseteilen 4 im Bereich des Fensterausschnittes 3 eine Rahmentasche 5 vorgesehen, in die die beiden Rahmenlängsstege 6 der Fresnellinse 1 beim Einsetzen eintauchen. Zur leichteren Entformung besitzen die Rahmentaschen 5 eine Aushebeneigung von etwa einem Grad. Um eine gute Abdichtung der Rahmenlängsstege 6 innerhalb der Rahmentaschen 5 zu erreichen, sind die Rahmenlängsstege 6 entsprechend der Aushebeneigung konisch abgeschrägt. Dadurch wird ein exaktes Anliegen der glatten Frontseite der Fresnellinse 1 an der entsprechenden Wand der Gehäustasche 5 sichergestellt. Eine weitere Verbesserung der Abdichtung wird dadurch erreicht, daß innerhalb der Rahmentasche 5 entlang des ganzen Fensterausschnitts 3 eine Auflagestufe 15 ausgebildet ist, auf die die Rahmenlängsstege 6 mit ihrer Auflagefläche 16 auftreffen.

Durch die besondere Ausbildung der Rahmenlängsstege 6 durch Zahnreihen mit einzelnen Zähnen, die nur durch eine relativ dünne Materialschicht miteinander verbunden sind, und zwischen denen sich Querschlitze 8 befinden, die für einen ausreichenden Spielraum sorgen, gelingt es, die Fresnellinse aus einer Ebene heraus zu einem Bogen zu formen, der an den Fensterausschnitt 3 angepaßt ist und innerhalb der beiden Rahmentaschen 5 eine sichere Fixierung und gleichzeitig gute Abdichtung der Fresnellinse 1 gegenüber den beiden Gehäusehälften 4 ermöglicht.

## Patentansprüche

1. Infrarot-Bewegungsmelder mit einer Fresnellinse (1), die von einem angeformten Rahmen (2) umschlossen wird, der in einem Fensterausschnitt (3) zwischen zwei das Gerätegehäuse bildenden Gehäuseteilen (4) fixiert ist, **dadurch gekennzeichnet**, daß der Rahmen (2) mit Hilfe eines für optische Zwecke geeigneten Materials im Spritzgußverfahren materialeinheitlich der Fresnellinse (1) angeformt ist und die beiden jeweils in eine bogenförmig angeordnete, im Fensterausschnitt (3) liegende Rahmentasche (5) der beiden Gehäuseteile (4) eintauchenden Rahmenlängstege (6) in Eintauchrichtung konisch so verjüngt sind, daß sie sich einer Aushebeneigung innerhalb der Rahmentaschen (5) der als Spritzgußteil hergestellten Gehäuseteile (4) dichtend anpassen.

2. Bewegungsmelder nach Anspruch 1, dadurch gekennzeichnet, daß die bogenförmig zwischen den beiden Gehäuseteilen (4) anzuordnende Fresnellinse (1) mit ihrer Frontseite (7) auf einer im wesentlichen planen Fläche ihrer Gußform liegend hergestellt ist, und die in Eintauchrichtung konisch verlaufenden Rahmenlängsstege auf ihrer der Frontseite (7) gegenüberliegenden Rückseite in geeignetem Abstand so mit Querschlitzen (8) versehen sind, daß entlang der Rahmenlängsstege (6) eine aus einer Vielzahl von einzelnen Zähnen gebildete Zahnreihe entsteht.

3. Bewegungsmelder nach Anspruch 2, dadurch gekennzeichnet, daß die Querschlitze (8) in Richtung zur Frontseite (7) der Fresnellinse (1) sich konisch verjüngen und mindestens so breit sind, daß die bei einer Verformung des Rahmens (2) zum Einsetzen der Fresnellinse (1) in die zugehörigen Rahmentaschen (5) bewirkte Abstandsänderung zwischen den Zähnen, nicht zu einem Aufeinandernpressen der Zähne führt.

4. Bewegungsmelder nach einem der vorhergehenden Ansprüche, dadurch gekennzeichnet, daß zwei Rahmenquerstege (10), die die beiden Rahmenlängsstege (6) miteinander verbinden, entsprechend diesen in gleicher Richtung geschlitzt sind.

5. Bewegungsmelder nach einem der Ansprüche 1 bis 3, dadurch gekennzeichnet, daß die Rahmenquerstege (10) als Kastenprofil geformt sind und Versteifungsstege (11) innerhalb des Kastenprofils angeordnet sind.

6. Bewegungsmelder nach einem der vorhergehenden Ansprüche, dadurch gekennzeichnet, daß die Anspritzstelle (12) für die Fresnellinse (1) in deren Mitte liegt.

7. Bewegungsmelder nach einem der vorhergehenden Ansprüche, dadurch gekennzeichnet, daß der mittlere Linsenkörper (13) der Fresnellinse (1) gegenüber den beiden äußeren Linsenkörpern (14) durch größere Materialanhäufung dicker gestaltet ist.

8. Bewegungsmelder nach einem der vorhergehenden Ansprüche, dadurch gekennzeichnet, daß in den Rahmentaschen (5) entlang dem Fensterausschnitt (3) eine Auflagestufe (15) ausgebildet ist, auf der der Rahmenlängssteg (6) mit dem zur Frontseite gelegenen vorderen Teil seiner Auflagefläche (16) trifft.

## Claims

1. Infrared movement sensor having a Fresnel lens (1) which is surrounded by an integrally moulded frame (2) which is fixed in a window section (3) between two housing parts (4) forming the device housing, characterized in that the frame (2) is integrally moulded in the same material as the Fresnel lens (1), using a material suitable for optical purposes and using the injection-moulding process, and the two frame longitudinal webs (6) which are inserted in each case into a frame pocket (5), located and arranged in a curved shape in the window section (3), of the two housing parts (4) are tapered conically in the insertion direction in such a way that they are adapted in a sealing manner to a tendency of the housing parts (4), which are manufactured as an injection-moulded part, to lift out inside the frame pockets (5).

2. Movement sensor according to Claim 1, characterized in that the Fresnel lens (1) which is to be arranged in a curved shape between the two housing parts (4) is manufactured with its front side (7) lying on an essentially plane surface of its mould, and the frame longitudinal webs, extending conically in the insertion direction, are provided on their rear side opposite the front side (7) with transverse slots (8) at a suitable spacing such that a row of teeth, formed from a multiplicity of individual teeth, is produced along the frame longitudinal webs (6).

3. Movement sensor according to Claim 2, characterized in that the transverse slots (8) taper conically in the direction of the front side (7) of the Fresnel lens (1) and are at least sufficiently wide that the change in spacing between the teeth, which change is effected during a deformation of the frame (2) in order to insert the Fresnel lens (1) into the associated frame pockets (5), does not lead to the teeth being pressed together.

4. Movement sensor according to one of the preceding claims, characterized in that two frame transverse webs (10), which connect the two frame longitudinal webs (6) to each other, are slotted to correspond to the latter in the same direction.

5. Movement sensor according to one of Claims 1 to 3, characterized in that the frame transverse webs (10) are moulded as a box profile and stiffening webs (11) are arranged inside the box profile.

6. Movement sensor according to one of the preceding claims, characterized in that the injection point (12) for the Fresnel lens (1) is located at its centre.

7. Movement sensor according to one of the preceding claims, characterized in that the central lens body (13) of the Fresnel lens (1) is configured to be thicker than the two outer lens bodies (14) by means of a greater accumulation of material.

8. Movement sensor according to one of the preceding claims, characterized in that, in the frame pockets (5) along the window section (3), a bearing step (15) is constructed, which is encountered by the frame longitudinal web (6) with the leading part, positioned to the front side, of its bearing surface (16).

## Revendications

1. Indicateur de mouvement à infrarouge, comportant une lentille de Fresnel (1) qui est entourée par un cadre (2) façonné et fixé dans une découpure de fenêtre (3) entre deux parties de boîtier (4) formant le boîtier d'appareil, caractérisé en ce que le cadre (2) est façonné dans une même matière que la lentille de Fresnel (1) dans le procédé d'injection, à l'aide d'une matière appropriée à des fins optiques, et en ce que les deux traverses longitudinales de cadre (6) enfoncées chacune dans une poche de cadre (5), des deux parties de boîtier (4), agencée en forme d'arc et située dans la découpure de fenêtre (3) se réduisent de façon conique dans la direction d'enfoncement de façon à ce qu'elles s'adaptent de manière étanche à une inclinaison de retrait dans les poches de cadre (5) des parties de boîtier (4) fabriquées sous la forme d'un élément injecté.

2. Indicateur de mouvement suivant la revendication 1, caractérisé en ce que la lentille de Fresnel (1) à agencer en forme d'arc entre les deux parties de boîtier (4) est fabriquée appliquée avec son côté frontal (7) sur une surface sensiblement plane de son moule et en ce que les traverses longitudinales de cadre qui s'étendent de façon conique dans la direction d'enfoncement sont munies sur leur côté postérieur opposé à leur côté frontal (7), à une distance appropriée, de rainures transversales (8) de façon à ce qu'il y ait le long des traverses longitudinales de cadre (6) une rangée de dents formée par une pluralité de dents séparées.

3. Indicateur de mouvement suivant la revendication 2, caractérisé en ce que les rainures transversales (8) se réduisent de façon conique dans la direction vers le côté frontal (7) de la lentille de Fresnel (1) et sont au moins d'une largeur telle que la modification de distance provoquée lors d'une déformation du cadre (2) pour l'insertion de la lentille de Fresnel (1) dans les poches de cadre (5) correspondantes ne conduit pas à un pressage des dents l'une contre l'autre.

4. Indicateur de mouvement suivant l'une des revendications précédentes, caractérisé en ce que deux traverses transversales de cadre (10) qui relient l'une à l'autre les deux traverses longitudinales de cadre (6) sont rainurées, conformément à ces dernières, dans la même direction.

5. Indicateur de mouvement suivant l'une des revendications 1 à 3, caractérisé en ce que les traverses transversales de cadre (10) sont façonnées sous la forme d'un profil en caisson et en ce que des traverses de renforcement (11) sont agencées à l'intérieur du profil en caisson.

6. Indicateur de mouvement suivant l'une des revendications précédentes, caractérisé en ce que l'endroit d'injection (12) pour la lentille de Fresnel (1) est situé dans son milieu.

7. Indicateur de mouvement suivant l'une des revendications précédentes, caractérisé en ce que le corps médian (13) de la lentille de Fresnel (1) est réalisé de façon plus épaisse, par une accumulation plus grande de matière, par rapport aux deux corps externes (14) de la lentille.

8. Indicateur de mouvement suivant l'une des revendications précédentes, caractérisé en ce que, dans les poches de cadre (5), le long de la découpure de fenêtre (3) il est réalisé un gradin d'appui (15) sur lequel la traverse longitudinale de cadre (6) bute par la partie antérieure, de sa surface d'appui (16), située sur le côté frontal.
